# EUROPEAN PATENT SPECIFICATION

(11) **EP 1 773 003 B1**
(45) Date of publication and mention of the grant of the patent: **15.01.2014**
(21) Application number: 05109210.4
(22) Date of filing: 04.10.2005
(51) Int. Cl.: H04L 12/735

(54) **Method and apparatus for discovering disjoint routes to multiple service nodes**
Verfahren und Vorrichtung zur Entdeckung von disjunkten Routen zu mehreren Dienstknoten
Procédé et dispositif pour découvrir des routes disjointes à multiples noeuds de service

(43) Date of publication of application: 11.04.2007
(73) Proprietor: NTT DoCoMo, Inc., Tokyo (JP)
(72) Inventor: Hofmann, Philipp, 80686 Munich (DE)
(74) Representative: Betten & Resch

(56) References cited:
- US-A1- 2004 029 553
- US-A1- 2005 063 312
- CHARLES E PERKINS SUN MICROSYSTEMS LABORATORIES ELIZABETH M ROYER UNIVERSITY OF CALIFORNIA ET AL: "Ad Hoc On-Demand Distance Vector (AODV) Routing; draft-ietf-manet-aodv-03.txt;" IETF STANDARD-WORKING-DRAFT, INTERNET ENGINEERING TASK FORCE, IETF, CH, vol. manet, no. 3, 25 June 1999 (1999-06-25), XP015022585 ISSN: 0000-0004

## Description

### FIELD OF INVENTION

The present invention relates to a method and an apparatus for discovering disjoint routes to multiple service nodes.

### BACKGROUND OF THE INVENTION

Connecting ad hoc networks with the Internet is useful for several application scenarios, enabling devices in ad hoc networks to access services in the Internet or to communicate with devices outside of their ad hoc network. An interworking functionality between the protocols in ad hoc networks and 'conventional' networks leads to a new paradigm in the design of radio access networks, namely Multihop Radio Access Networks (MRANs). As in existing cellular and wireless LAN systems, mobile nodes (MNs) can communicate with gateways (GWs, also known as base stations) via a wireless interface, and the gateways are somehow connected to the Internet via wired interfaces. The new feature is the multihop functionality of MNs, which extends the radio coverage of the gateways. This architecture is interesting for high-rate mobile communication systems beyond the third generation (3G). It is especially suitable if the cell size is very small, e.g., due to operation at high frequencies and limited power of mobile devices. MRANs can solve the problem of weak indoor coverage and can help to reduce the transmission power of mobile devices, leading to longer battery lifetime and less emission. The multihop capability can increase flexibility and reduce costs in network planning and operation.

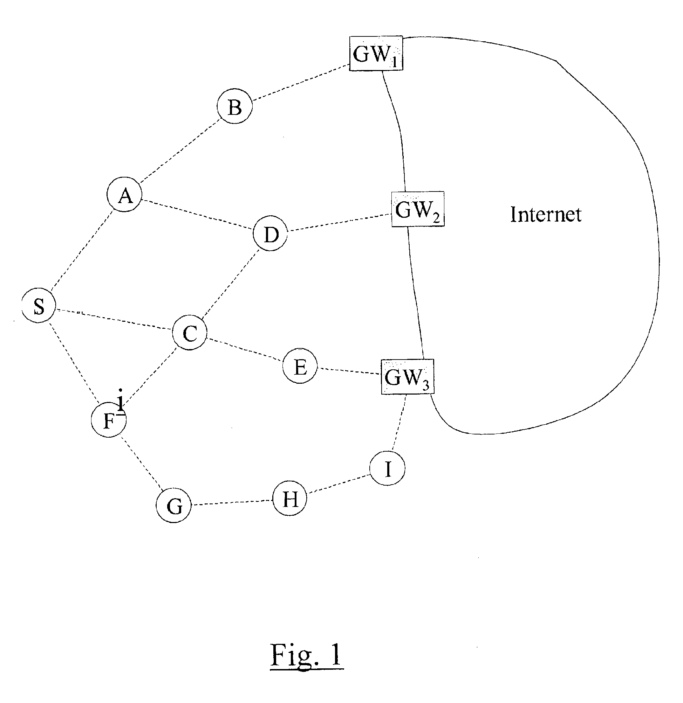

An example of a multihop radio access network is schematically illustrated in Fig. 1. Fig. 1 shows a plurality of mobile nodes A, B, C,...,I, S, which may establish connections between each other, either directly or via intermediate nodes in a multihop fashion. In this manner a node (e.g. node S in Fig. 1) may then also connect to the internet via one or more of the gateways GW₁ to GW₃, thereby using other MNs (e.g. mobile nodes A to I shown in Fig. 1) as relays.

MNs in MRANs are usually devices like mobile phones, PDAs or laptops operated by end-users. Hence, the mobile devices may be moved around and turned on and off arbitrarily. This makes the multihop communication path between an MN in the MRAN and an GW unstable. An advantage of MRANs, however, is that usually MNs can reach more than one GW due to the multihop communication. Hence, MNs may connect to the Internet over multiple GWs simultaneously (e.g., to increase the service quality by load balancing) or perform a fast multihop handover to another GW if the route to the current one is broken (to increase reliability of the communication).

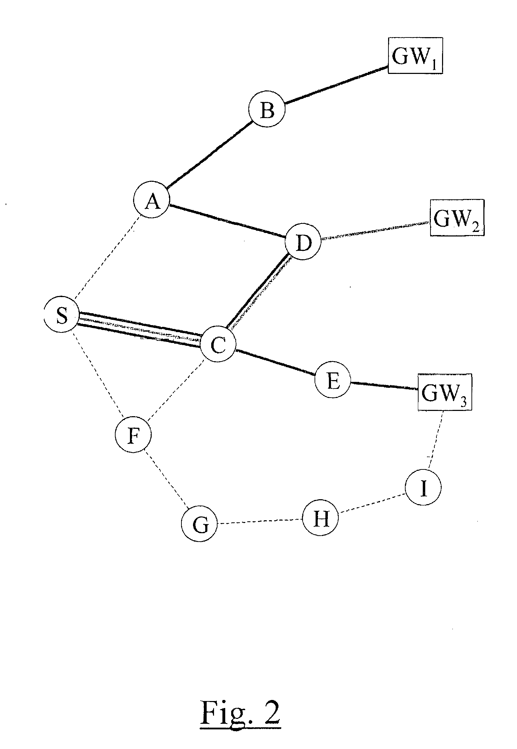

In Fig. 2 there is shown an example where a MN connects to three gateways via three different routes. The example in Fig. 2, however, shows the problem that may arise in an MRAN with multiple GWs: the routes to the three different GWs all share one single link (S-C), negating the advantage of having multiple GWs. On the one hand, balancing traffic load to the different GWs can not be efficiently performed as the throughput is limited by the capacity of one single link. On the other hand, the link S-C and the node C are single point of failures, i.e., if link S-C fails or node C is turned off, the routes to all GWs are disrupted at the same time and a fast handover is not possible. Instead, a new route or GW discovery with high delay would have to be performed.

In view of the foregoing it is an object of the invention to overcome the disadvantages mentioned before.

US-2004/0029553 discloses a method routing message data from a source node to a destination node in a mobile ad-hoc network. Multiple routes are detected and ranked for each traffic class and the top n routes for each traffic class are selected. The ranking process may include a factor such as disjointness.

### SUMMARY OF THE INVENTION

The present invention is defined in the independent claims. The dependent claims define embodiments of the invention.

In order to improve service quality and communication reliability, it is advantageous to have disjoint routes between the originating mobile node and the multiple service nodes. While the routes may be either link-disjoint (i.e., the different routes do not share any link) it is even preferable if they are node-disjoint (i.e., the different routes do not share any relaying node). Node-disjoint routes are link-disjoint, too. This avoids the problems which could arise in portions where the routes are not disjoint, e.g. by the failure of a single node or link. Service nodes may be any nodes which provide a service to the mobile node. Examples for service nodes can be gateways providing access to the internet or another network, a print server for printing documents, a fileserver for storing documents, or the like.

According to one embodiment the route request contains a path extension parameter indicating to which extent a found route may be worse than the best path with respect to a certain metrics, said method further comprising:
if said route replies received by said mobile node do not correspond to a sufficient number of disjoint routes, issuing a new route request having an incremented path extension parameter.

This makes it possible to repeat the route request procedure in a controlled manner until the desired result is achieved, e.g. until disjoint routes to all service nodes (or to a predetermined minimum number of service nodes) have been discovered. The higher the path extension parameter, the more route replies are generated (due to the greater freedom with respect to the possible paths), and therefore the desired number of disjoint routes may be found by repeatedly incrementing this parameter until a satisfactory result has been obtained. The metrics gives a measure for the "quality" or "performance" of the path, and by using the metrics a certain route or path can be compared to another one with respect to quality or performance. Possible metrics are the number of hops, the delay time or the bandwidth. The path extension parameter then indicates the amount by which a found path or route may deviate from the "best route" while still being tolerable. In other words, the path extension parameter defines a spectrum of tolerable paths or routes with respect to a certain metrics.

According to one example the method further comprises:
in each node relaying a route request, storing a trace route of said route request;
if a route request reaches a node again, forwarding said route request only if the path which is has traveled with respect to a certain metrics is not worse than the best known route by an amount larger than defined by said path extension parameter.

Storing the trace route of a relayed request enables a node to evaluate further route requests which are received later as to whether it makes sense to forward them. This is done by evaluating the known routes (the ones stored in the storage) compared to the route of an incoming route request by comparing them applying a certain metrics and checking whether a threshold defined by the path extension parameter is exceeded. E. g. the metrics may be the number of hops, and in this case checking the path extension parameter of a route request involves comparing its route trace with the ones of the route requests already stored in the relay node which makes it possible to discard those requests which have already traveled too long (too large a number of hops) so that they cannot lead anymore to the discovery of a route which would fulfill the path extension parameter criterion stating that a discovered route should not be longer that the shortest route plus the path extension parameter (which in this embodiment is defined as an additional number of hops).

According to one example the method further comprises:
attaching a sequence number identifying the route request to each newly issued route request;
in each node relaying a route request, storing the originating mobile node, the sequence number and the trace route of said route request;
if a route request is received by a relay node, checking whether said route request is to be forwarded or to be discarded by carrying out one or more of the following:
   if no entry corresponding to a route request from the node from which the request originates is stored at the storage of said mobile node, forwarding said route request;
   for those requests for which a request from the originating node has already been stored, if no entry corresponding to the sequence number of said received route request is stored at the storage of said relay node, forwarding said route request;
   if an entry corresponding to a higher sequence number than the one of said received route request is stored at the storage of said relay node, discarding said route request;
   if an entry corresponding to the sequence number of said received route request is stored at the storage of said relay node, forwarding said route request only if the path which the route request has traveled is different from previous route requests stored at said relay node and if the path which it has traveled with respect to a certain metrics is not worse than the best known route by an amount larger than defined by said path extension parameter.

Attaching a sequence number to each issued route request makes it possible to distinguish between the different route requests. This makes it e.g. possible to identify "old requests" which have already been succeeded by a later issued request. In case of the reception of such an old request it may be discarded. This avoids that the network is kept busy circulating old route request messages.

On the other hand, newly issued messages may be identified, forwarded and an entry in the storage of the relay node may be stored.

For duplicate messages for which an entry in the storage of the relay node already exists, the checking of the route of the newly received request versus the one or the ones already stored avoids that an already existing route is further evaluated again. Checking the path extension parameter allows to ensure that the quality criterion according to a certain metrics is fulfilled, thereby providing an efficient route discovery procedure which limits the investigation of possible routes to those which fulfill the criterion defined by the path extension parameter.

According to one example the method further comprises:
sending a new route request having an incremented path extension parameter if one or more of the following conditions are met:
   the route replies do not contain disjoint routes to all or to a predetermined number of service nodes;
   the route replies contain link disjoint routes but not node disjoint routes.

The repeated generation of route request messages based on incremented path extension parameters makes it possible to run the procedure until the desired number of paths has been discovered. Depending on the set requirement this may e.g. achieved if disjoint routes to all possible service nodes have been discovered, or if a minimum number of disjoint routes to different service nodes has been discovered.

It may be required that the discovered routes are node disjoint and not only link-disjoint. In such a case a route request is generated based on an incremented path extension parameter until the desired number (or all possible) routes being node-disjoint are discovered.

According to one example the route request based on an incremented path extension parameter is generated until a maximum value for the path extension parameter has been reached.

According to one example the method comprises:
if multiple possible disjoint routes have been discovered by said method, selecting those routes for the communication which according to the metrics of the path extension parameter are most advantegeous.

It may happen that multiple possible routes are detected which are disjoint and therefore fulfill the basic requirement. In this case it may be preferable to select those routes for the actual communication which in terms of the metrics in which the path extension parameter is defined are most preferable. If the path extension parameter is defined in number of hops, it may be most advantegeous to select those routes which in total have the least number of hops. A similar selection (highest total bandwidth, least total delay) may be made in case of other metrics.

According to one example there is provided a mobile node for discovering routes from said mobile node to multiple service nodes which may provide a service to said mobile node in an ad-hoc network comprising a plurality of nodes, wherein said mobile node comprises:
a sending module for sending a route request from said mobile node, said route request specifying that a route to any service node is to be discovered without specifying a single individual service node as a destination, whereas said route request is distributed by said nodes of said network, whereas each node further distributing said route request attaches its own ID to said route request, and if a route request reaches a service node, a route reply being sent back and comprising the trace of said route request from said mobile node to said service node;
a determining module for determining based on said route replies received by said mobile node those routes which are disjoint.

According to one example said route request contains a path extension parameter indicating the extent by which a found route may be worse than the best known available route with respect to a certain metrics, said mobile node further comprising:
a re-issuing module for if said route replies received by said mobile node do not correspond to a sufficient number of disjoint routes, issuing a new route request having an incremented path extension parameter.

According to one example the mobile node further comprises:
a storage module for storing in each node relaying a route request, a trace route of said route request;
a forwarding module for if a route request reaches a node again, forwarding said route request only if the path which is has traveled with respect to a certain metrics is not worse than the best known route by an amount larger than defined by said path extension parameter.

According to one example the mobile node further comprises:
a module for attaching a sequence number identifying the route request to each newly issued route request;
a storage module for storing in case of a relayed route request message the originating mobile node, the sequence number and the trace route;
a module for checking if a route request is received by said mobile node whether said route request is to be forwarded or to be discarded by carrying out one or more of the following:
   if no entry corresponding to the sequence number of said received route request is stored at the storage of said mobile node, forwarding said route request;
   if no entry corresponding to a route request from the node from which the request originates is stored at the storage of said mobile node, forwarding said route request;
   for those requests for which a request from the originating node has already been stored, if an entry corresponding to a higher sequence number than the one of said received route request is stored at the storage of said mobile node, discarding said route request;
   if an entry corresponding to the sequence number of said received route request is stored at the storage of said mobile node, forwarding said route request only if the path which the route request has traveled is different from previous route requests stored at said mobile node and if the path from the source mobile node from which the route request originates to the relaying mobile node is not longer that the shortest known route from said mobile node to said relaying mobile node plus said path extension parameter.

According to one example the mobile node further comprises:
a sending module for sending a new route request having an incremented path extension parameter if one or more of the following conditions are met:
   the route replies do not contain disjoint routes to all or to a predetermined number of service nodes;
   the route replies contain link disjoint routes but not node disjoint routes.

According to one example there is provided a relay node in a mobile network for receiving messages from a mobile node according to one of the embodiments of the invention intending to discover routes from said mobile node to multiple service nodes which may provide a service to said mobile node in an ad-hoc network comprising a plurality of said relay nodes, wherein said relay node comprises:
a receiving module for receiving a route request from said mobile node or a further relay node, said route request specifying that a route to any service node is to be discovered without specifying a single individual service node as a destination, whereas said route request is distributed by said relay nodes of said network, whereas each node further distributing said route request attaches its own ID to said route request, and if a route request reaches a service node, a route reply being sent back and comprising the trace of said route request from said mobile node to said service node;
a request forwarding module for further distributing said route request message;
a reply forwarding module for forwarding a route reply along the trace route of said route reply.

According to one example wherein said route request contains a path extension parameter indicating to which extent a found route may be worse than the best path with respect to a certain metrics, said relay node further comprising:
a storage module for storing for each relayed route request a trace route of said route request;
a forwarding module for if a route request reaches said relay node, forwarding said route request only if the path which is has traveled with respect to a certain metrics is not worse than the best known route by an amount larger than defined by said path extension parameter.

According to one example the relay node further comprises:
a module for attaching a sequence number identifying the route request to each newly issued route request;
a storage module for storing in case of a relayed route request message the originating mobile node, the sequence number and the trace route;
a module for checking if a route request is received by said mobile node whether said route request is to be forwarded or to be discarded by carrying out one or more of the following:
   if no entry corresponding to a route request from the node from which the request originates is stored at the storage of said mobile node, forwarding said route request;
   for those requests for which a request from the originating node has already been stored, if no entry corresponding to the sequence number of said received route request is stored at the storage of said mobile node, forwarding said route request;
   if an entry corresponding to a higher sequence number than the one of said received route request is stored at the storage of said mobile node, discarding said route request; if an entry corresponding to the sequence number of said received route request is stored at the storage of said mobile node, forwarding said route request only if the path which the route request has traveled is different from previous route requests stored at said mobile node and if the path from the source mobile node from which the route request originates to the relaying mobile node which it has traveled with respect to a certain metrics is not worse than the best known route by an amount larger than defined by said path extension parameter.

According to one example said metrics is one of the following:
the number of hops of a path;
the delay time of a path;
the bandwidth of a path

According to one example there is provided a computer program comprising computer executable instructions which when being executed by a computer enable said computer to carry out a method according to an embodiment of the invention.

### BRIEF DESCRIPTION OF THE DRAWINGS

Fig. 1 schematically illustrates an example of a network configuration to be used in connection with an embodiment of the invention.
Fig. 2 schematically illustrates a network where a source node is connected to a plurality of routes which are not disjoint.
Fig. 3 schematically shows a flowchart illustrating a method according to an embodiment of the invention.
Fig. 4 schematically illustrates disjoint routes discovered using an embodiment of the invention.
Fig. 5 schematically shows a flowchart illustrating a method according to a further embodiment of the invention

### DETAILED DESCRIPTION

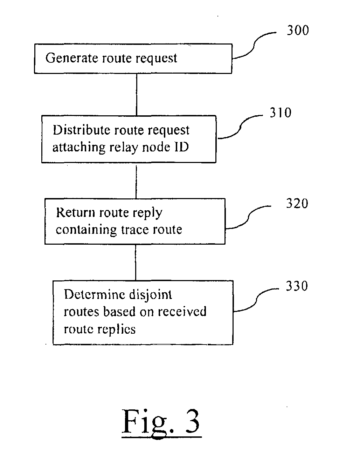

In the following embodiments of the invention will be described. According to a first embodiment which will now be explained in connection with Fig. 3 disjoint routes may be discovered.

According to one embodiment a mobile node (a source node) which desires to discover a route to a plurality of service nodes generates a route request (operation 300 in Fig. 3). This route request message does not specify a distinct individual service node, it rather specifies that it is desired to discover a route to any service node. Usually the type of service node (e.g. internet gateway, print server, file server, or the like) is specified, however, the individual service nodes are not specified by the request. The request is then distributed through the network, starting from the originating node (the "source node") and being forwarded and relayed through the other nodes of the network. Each relaying node attaches its ID to the request and then forwards it, e.g. by broadcasting it to all its neighbouring nodes (except the one from which it was received) (operation 310 in Fig. 3). If a thus forwarded route request messaged reaches a service node the service node generates a route reply which contains the path which the route request has travelled (the trace route) on its way to the service node. The thus generated route reply message is then sent back to the source node (operation 320 in Fig. 3). In this manner the source node may receive multiple route reply messages from different service nodes. By comparing the trace routes of the multiple route replies the originating node may determine those routes which are disjoint (operation 330 in Fig. 3). If a sufficient number of disjoint routes (e.g. a number which meets a predefined criterion which was internally set or defined by a user) has been determined in this manner, the source node may use them to have the services rendered by the service nodes corresponding to the thus discovered disjoint routes.

It may, however, happen that either no or not a sufficient number of disjoint routes can be discovered in this manner. The following embodiment takes this possibility into account. The method for discovering routes according to his embodiment enables an MN to discover link- or node-disjoint routes to multiple GWs in an efficient, reactive way. In this embodiment it is assumed that a MN searches for routes to different gateways(GWs).

The MN searching for gateways broadcasts a route request (RREQ) message with two distinct features:
- The RREQ message contains a request for a route to any gateway instead of a particular destination.
- The RREQ contains a path extension parameter that specifies the criterion or the extent by which a found route may be disadvantageous compared to the best available route to a gateway according to a certain metrics. This enables the initiating MN to control the quality (or a quality measuring parameter) of the found routes, which is required if the found best routes to multiple gateways are not disjoint.

The source MN sets the path extension parameter to zero when initiating the first RREQ.
Other MNs receiving the RREQ are aware of the path extension parameter and forward it appropriately. Furthermore, each MN relaying the RREQ message appends its own ID. Hence, if an GW eventually receives the RREQ, the message contains the whole recorded route from the source to the GW. For each received RREQ, the GWs copy the recorded route from the RREQ to a route reply (RREP) message and send it back to the source MN.

The source MN may then determine path- or node-disjoint routes to all gateways. In case it can not calculate disjoint routes with the information from the received RREP messages, it increments the path extension parameter (corresponding to a larger tolerance in quality, e.g. a larger number of hops being tolerated, a lower bandwidth being tolerated or a higher delay being tolerated compared to the best possible route) and initiates a new RREQ with the new value of n. The MN then will receive more RREPs from the GWs with less advantageous routes (as defined tolerable by path extension parameter n). Again, it tries to determine disjoint routes to the GWs. The source MN repeats the above procedure until it either can determine path-disjoint or node-disjoint routes to all GWs or until a certain limit for n has been reached.

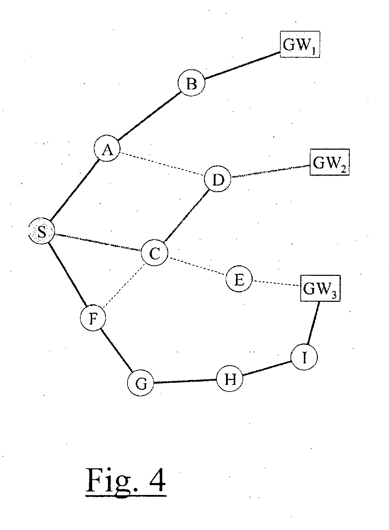

Broadcasting the first RREQ with n equal to zero and incrementing it until disjoint routes have been found helps limiting the signalling overhead in the MRAN. As a result, an MN can efficiently discover node-disjoint routes to multiple gateways, as illustrated in Fig. 4.

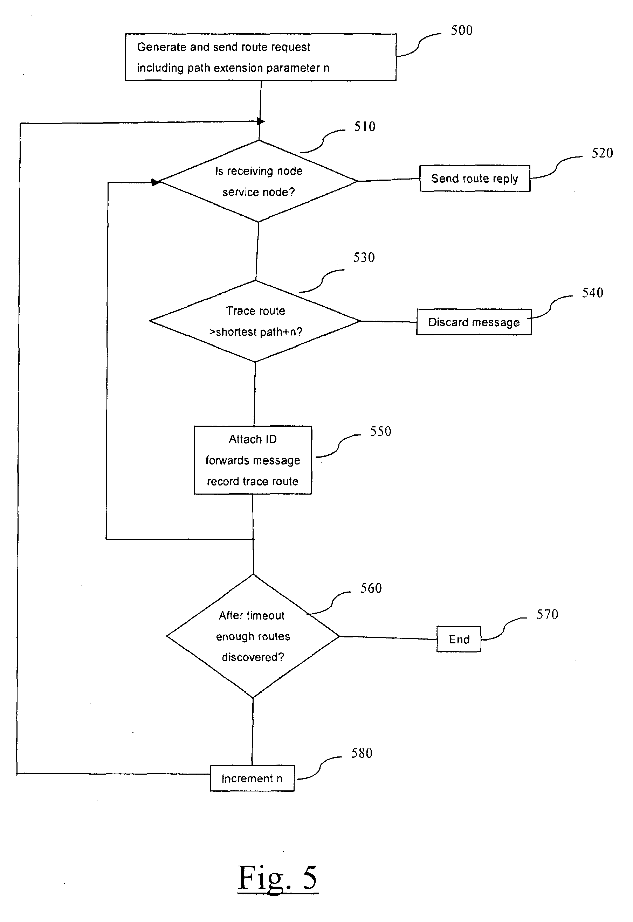

In the following the operation of the embodiment will be explained in somewhat more detail referring to Fig. 5. In this embodiment the path extension parameter defines the extent to which a less advantageous route compared to the best available route is still tolerable in terms of path length as defined by the number of hops. Consequently the path extension parameter in this embodiment corresponds to a number of hops.

In operation 500 the route request is generated and sent including the path extension parameter. If in operation 510 the request is received by a service node a route reply message is generated and sent in operation 520. Otherwise the receiving node is a relay node which in operation 530 checks whether the message is to be further forwarded or not. This is done by checking whether the path extension parameter n pus the trace route of the received message (the number of hops which the message has traveled along the trace route) is larger than the shortest available path (the shortest path between the source node and the relay node among the trace routes of already receive route requests the trace routes of which have been stored in the relay node). If this is not the case the route request is forwarded further, adding the ID of the relay node to the trace route and storing the trace route of the request in the storage of the relay node (operation 550). If the criterion for the forwarding is not fulfilled, the route request is discarded (operation 540). The forwarding, however, means that the procedure returns to operation 510, since the route request is received by the next node.

In operation 560 it is then checked (based on the received route replies like in the previous embodiment) whether a sufficient number of routes has been discovered. This check is e.g. performed after a timeout has expired, i.e. the procedure is given a certain time to detect routes, and after that time evaluation 560 is performed. If a sufficient number of routes has already been discovered, the procedure ends with operation 570. However, if no or not a sufficient number of routes have been discovered yet, in operation 580 the path extension parameter is incremented (e.g. by 1 or any other predetermined number), and the procedure returns to operation 510.

Alternatively in one embodiment it could be continuously checked whether a predefined criterion regarding the discovery of disjoint routes is fulfilled. E.g. this criterion could require that a certain number of disjoint routes is to be discovered. As soon as the criterion is fulfilled by the discovered routes, the whole procedure ends. If no sufficient number of disjoint routes to fulfil the criterion is discovered, the procedure may continue using a certain path extension parameter n until a timeout expires. After expiration of the timeout the path extension parameter then is incremented and the procedure starts again using the incremented path extension parameter. This can be repeated again until a general timeout expires or until a maximum path extension parameter (which may be predefined, e.g. by the user) is reached without discovering a sufficient number of disjoint routes.

In order to speed up the procedure there may be chosen a starting value for the path extension parameter which is larger than 0. Furthermore, increments other than 1 may be chosen.

The procedure for establishing disjoint routes to multiple GWs as explained before has two main advantages.
- On the one hand, there is no single point of failure (link, relaying node or GW) in the path from the MN in the ad hoc network to the Internet. If one link, relaying node or GW fails, the source MN can still use an alternative path towards the Internet. This is particular important if high communication reliability is required, e.g., in emergency situations. Furthermore, avoiding single point of failures also increases the quality of services, as it is less likely that a session is interrupted for a longer time.
- On the other hand, using disjoint routes enables very efficient load balancing over different GWs, as no relaying node, link or GW is used for more than one traffic flow (disregarding other MNs' traffic). This again increases the quality of services.

In the foregoing embodiment the path extension parameter was used to assess whether a certain path which an incoming route request has traveled is good enough (or "short enough") such that the route request deserves being forwarded. In a more general approach one can consider this as an evaluation of the route of an incoming route request being carried out with respect to its quality compared to the best available route according to a certain metrics. In the foregoing example the metrics is the number of hops which the route request has traveled. Using this metrics the path of the incoming route request is compared with the "best" path so far by comparing it with the paths stored in the storage of the mobile node using the metrics defined by the number of hops as parameter. If the path of the incoming request differs from the "best path" by more than a "path extension parameter (in the foregoing example an additional number of hops) it is discarded.

However, this approach can also in further embodiments be applied using other metrics such as the path delay or the bandwidth. E. g. in case of the delay used as the metrics an incoming route request is assessed by evaluating how much it is delayed compared with the already existing paths from the same originating node which are stored in the relay node. If the delay is larger than a "path extension parameter" (which in this embodiment then is a delay time) the route request is discarded, otherwise it is forwarded to the other nodes. The "best known route" or "route having the best quality" in this embodiment would be the "fastest route", and the path extension parameter defines how much slower a path may be in order to still be considered acceptable.

Alternatively, the bandwidth may be used as a metrics for assessing the route which an incoming route request has taken. In this case the "best path" is the path having the highest bandwidth, and the path extension parameter is a bandwidth difference by which the bandwidth of a still tolerable path may be smaller than the best path. Incoming route requests are then assessed with respect to the bandwidth of their corresponding path which they traveled, and depending on this assessment the route request is either discarded or forwarded. The "best known path or route" in this embodiment is the one having the highest bandwidth, and the path extension parameter defines how much less bandwidth a path may have in order to still be considered acceptable.

it will be understood by the skilled person that if the metrics in which the path extension parameter is defined is the delay, the increment by which the path extension parameter is incremented if further routes are to be searched is in units of delay time. Similarly, if the metrics in which the path extension parameter is delayed is the bandwidth, the increment by which the path extension parameter is incremented to increase the quality tolerance in the search for further routes is in units of bandwidth, whereas in this case the increments are actually negative to dcrease the amount of bandwidth which is still tolerable.

In the following a further embodiment according to the invention will be described. In this embodiment the discovery of disjoint routes to multiple gateways is composed of four steps, namely RREQ initiation, RREQ forwarding, Route Reply, and Route calculation, which will be described in somewhat more detail in the following.

### Route Request (RREQ) initiation

This step corresponds top operation 500 of the previous embodiment, however, it is somewhat different as explained in the following. The RREQ message in this embodiment contains the source MN's ID (e.g., IP address) and a sequence number. The sequence number is set to zero for the first RREQ an MN sends out and incremented for each new RREQ sent by this MN. The unique ID and sequence number in the RREQ message allow other MNs receiving this message to detect whether it is a duplicate one. This may happen if the RREQ is forwarded from the source to the destination over different routes.
The RREQ message also contains the path extension parameter (n). If an MN initiates a new GW discovery, it sets n to zero for the first RREQ. It then broadcasts this message to all neighbors.

### RREQ forwarding

This step corresponds to operations 510, 530, and 550 of the previous embodiment. Inasmuch as there are differences they are explained in the following.
Generally, each MN that relays an RREQ message appends its own ID. This enables any node receiving this message to trace back the path the message has traveled so far. Furthermore, nodes store the originators ID, sequence number and route trace of each relayed RREQ message in a table. In order to "keep the storage clean" the data may be stored only for a predetermined time, e.g. for a short time such as, e.g., 3 seconds. The time for which the data is stored should be chosen sufficiently short to avoid the flooding of the storage with already unnecessary data, on the other hand the data should be stored sufficiently long to avoid the effect that some requests are circulating forever because before they are recognized as having come in already once before the storage has already been cleared. The suitable time parameter depends on the size and the complexity of the network and may be chosen appropriately.

An MN receiving an RREQ message compares the information contained in this message with the information of its own table. Depending on the result, it processes the message in different ways (this corresponds to the checking operation 530 of the previous embodiment):
- If it is a new message (i.e., there is no entry for this source MN in the table or the sequence number stored in the table for this source MN is lower than the sequence number of the received message), the MN forwards it to all neighbors.
- If it is an old message (i.e., the sequence number stored in the table for this source MN is higher than the sequence number of the received message), the MN discards the message.
- If it is a duplicate message (i.e., the sequence number stored in the table for this source MN is equal to the sequence number of the received message), the MN only forwards this message if the path it has traveled is different than the paths of previous duplicate messages and not longer than the shortest known route to the source MN plus n. Otherwise, the message is discarded. Furthermore, messages are discarded if they have traveled in a loop, i.e., the receiving MN finds its own ID in the route record of the received RREQ.

Considering the example topology shown in Fig. 1, the routes that are stored by each MN and GW after initiation of one RREQ by node S depending on the path extension parameter n are listed in table 1. For instance, node A receives the RREQ directly from S with a path length of 1. If it now receives a duplicate RREQ that has traveled the path S-C-D-A (with a length of 3 hops), it only forwards it if n was specified with 2 in the message (row two, column four in table 1).

**Table 1: Found routes between S and other MNs and GWs depending on n**

| | n=0 | n=1 | n=2 |
|---|---|---|---|
| A | S-A | S-A | S-A |
| | | | S-C-D-A |
| B | S-A-B | S-A-B | S-A-B |
| | | | S-C-D-A-B |
| C | S-C | S-C | S-C |
| | | S-F-C | S-F-C |
| | | | S-A-D-C |
| D | S-A-D | S-A-D | S-A-D |
| | S-C-D | S-C-D | S-C-D |
| | | S-F-C-D | S-F-C-D |
| E | S-C-E | S-C-E | S-C-E |
| | | S-F-C-E | S-F-C-E |
| | | | S-A-D-C-E |
| F | S-F | S-F | S-F |
| | | S-C-F | S-C-F |
| G | S-F-G | S-F-G | S-F-G |
| | | S-C-F-G | S-C-F-G |
| H | S-F-G-H | S-F-G-H | S-F-G-H |
| | | S-C-F-G-H | S-C-F-G-H |
| I | S-F-G-H-I | S-F-G-H-I | S-F-G-H-I |
| GW₁ | S-A-B-GW₁ | *SA-B-GW₁* | S-A-B-GW₁ |
| | | | S-C-D-A-B-GW₁ |
| GW₂ | S-A-D-GW₂ | S-A-D-GW₂ | S-A-D-GW₂ |
| | S-C-D-GW₂ | S-C-D-GW₂ | S-C-D-GW₂ |
| | | *S-F-C-D-GW₂* | S-F-C-D-GW₂ |
| GW₃ | S-C-E-GW₃ | *S-C-E-GW₃* | S-C-E-GW₃ |
| | | S-F-C-E-GW₃ | S-F-C-E-GW₃ |
| | | | S-F-G-H-I-GW₃ |
| | | | S-A-D-C-E-GW₃ |

### Route reply (RREP)

This corresponds to operation 520 of the previous embodiment. A GW receiving an RREQ message processes it in a similar way as an relaying MN. Like a relaying MN it checks whether the incoming request should be discarded or deserves "further processing" (in other words, whether it is regarded as a "valid" route request), however, contrary to a relaying node further processing in case of a service node does not mean further distributing the route request, but means issuing and sending back a route reply. The check whether a route reply should be sent (whether the route request is "valid") is carried out partly in a manner analogous to the check whether an incoming route request is to be further distributed by a relaying node. Similarly it is at first checked whether from the same originating node from which the request comes there has already been received a route request. If this is not the case, a route reply is sent back.

If a route request from the same originating node was already received before, the further processing may depend on the individual embodiment. According to one embodiment the route request may be discarded because an earlier route request from the same originating node means that a route from this node to the service node has already been discovered so that the route request may be discarded (no further route being necessary). However, according to another embodiment the route corresponding to the newly incoming request is compared to the already known route of the previous request, and if the new route is better with respect to a certain metrics (e.g. the number of hops, the delay time, the bandwidth) a route reply is sent. According to an even further embodiment the further processing may also depend on the sequence number. E.g. if the sequence number is higher than the one of a previous RREQ received from the same originating node, a RREP is sent because it might be possible that the route corresponding to the previous RRQ is not in use anymore. It may then be left up to the originating node to decide whether the route corresponding to the later received route reply or the already existing route should be used if the old route is still active.

Also in case of a sequence number being the same than the one of a previous RREQ from the same node, it may in one embodiment make sense to return a route reply if the quality criterion defined by the path extension parameter is fulfilled. This makes it possible to inform the originating node about a further route which still fulfills the path extension criterion, and the originating node may use this route as a backup route in case the route with the better quality (less hops, less delay, or higher bandwidth) fails for some reason.

If the RREQ is considered valid (i.e., it has not been discarded), the GW copies the route recorded in the RREQ message to a RREP message, appends its own ID and sends the RREP to the originator of the RREQ. It should be noted here that the RREP may be sent back the same path which was taken by the RREQ as it is recorded in the trace route. However, in one embodiment it is also possible that a different route is chosen for the RREP on its way back to the originating node. This is e.g. possible if the embodiment makes use of an underlying routing protocol which should not be amended. The routes found to each GW depending on n are shown in the last three rows of table 1.

### Route calculation

This step has not been explained in detail in the previous embodiment, however, it corresponds in the present embodiment and also in the previous embodiment to operation 330 of the embodiment which was explained in connection with Fig. 3.
Depending on n, the source MN will receives multiple RREPs for multiple routes from the different GWs, as shown in the last three rows of table 1. In the present example, there are no disjoint routes to all three GWs if n is zero. Node-disjoint routes can only be found to GW1 and GW2 (S-A-B-GW₁ and S-C-D-GW₂, indicated with bold font in column two of table 1) or to GW1 and GW3 (S-A-B- GW₁ and S-C-E- GW₂).

Assuming that the setting requires that disjoint routes to all service nodes are to discovered, the route discovery for n= 0 was not yet fully successful. Hence, the source MN initiates a second RREQ (with incremented sequence number) with n equal to one. Now, it gets more RREPs with possible routes and the three GWs can be reached via path-disjoint routes. In fact, there are two different possibilities of how to reach the three GWs via path-disjoint routes (indicated in third column of table 1 in bold and italic fonts, respectively). In this case the MN selects the set of routes that minimizes the total number of hops (i.e., the sum of the number of hops of all three disjoint routes). However, in our example both possibilities have the same total number of hops. In this case a route may be chosen arbitrarily.

In case that the MN is not satisfied with path-disjoint routes, it may initiate a third RREQ with n set to two. Now the source MN actually receives enough RREP messages allowing it to determine node-disjoint routes to the three GWs (indicated with bold font in column four of table 1).

It should be noted that the foregoing embodiment used the "number of hops" as the metrics to assess which is the "best path" (the one having the smallest number of hops) and to define the path extension parameter as a number of additional hops which are still considered acceptable. However, the embodiment may be analogously used employing a different metrics such as the delay time or the bandwidth, as was already explained in connection with previous embodiments.

It will be understood by the skilled person that the embodiments described hereinbefore may be implemented by hardware, by software, or by a combination of software and hardware. The modules described in connections with embodiments of the invention may be as a whole or in part implemented by microprocessors or computers which are suitably programmed such as to act in accordance with the methods explained in connection with embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for discovering routes from a mobile node to multiple service nodes which may provide a service to said mobile node in an ad-hoc network comprising a plurality of nodes, wherein said method comprises:
sending a route request from said mobile node, said route request specifying that a route to any service node is to be discovered without specifying a single individual service node as a destination,
distributing said route request by said nodes of said network, whereas each node further distributing said route request attaches its own ID to said route request,
if a route request reaches a service node, sending back a route reply comprising the trace of said route request from said mobile node to said service node,
determining based on said route replies received by said mobile node those routes which are disjoint, wherein said route request contains a path extension parameter indicating to which extent a found route may be worse than the best path with respect to a certain metrics, said method further comprising:
if said route replies received by said mobile node do not correspond to a sufficient number of disjoint routes, issuing a new route request having an incremented path extension parameter.

2. The method of claim 1, further comprising:
in each node relaying a route request, storing a trace route of said route request,
if a route request reaches a node again, forwarding said route request only if the path which is has traveled with respect to a certain metrics is not worse than the best known route by an amount larger than defined by said path extension parameter

3. The method of one of the preceding claims, further comprising:
attaching a sequence number identifying the route request to each newly issued route request;
in each node relaying a route request, storing the originating mobile node, the sequence number and the trace route of said route request;
if a route request is received by a relay node, checking whether said route request is to be forwarded or to be discarded by carrying out one or more of the following:
if no entry corresponding to a route request from the node from which the request originates is stored at the storage of said mobile node, forwarding said route request;
for those requests for which a request from the originating node has already been stored, if no entry corresponding to the sequence number of said received route request is stored at the storage of said relay node, forwarding said route request;
if an entry corresponding to a higher sequence number than the one of said received route request is stored at the storage of said relay node, discarding said route request;
if an entry corresponding to the sequence number of said received route request is stored at the storage of said relay node, forwarding said route request only if the path which the route request has traveled is different from previous route requests stored at said relay node and if the path which it has traveled with respect to a certain metrics is not worse than the best known route by an amount larger than defined by said path extension parameter.

4. The method of one of the preceding claims, further comprising:
sending a new route request having an incremented path extension parameter if one or more of the following conditions are met:
the route replies do not contain disjoint routes to all or to a predetermined number of service nodes;
the route replies contain link disjoint routes but not node disjoint routes.

5. The method of one of the preceding claims, further comprising:
if multiple possible disjoint routes have been discovered by said method, selecting those routes for the communication which according to the metrics of the path extension parameter are most advantegeous.

6. A mobile node for discovering routes from said mobile node to multiple service nodes which may provide a service to said mobile node in an ad-hoc network comprising a plurality of nodes, wherein said mobile node comprises:
a sending module for sending a route request from said mobile node, said route request specifying that a route to any service node is to be discovered without specifying a single individual service node as a destination,
means for receiving one or more route replies being sent back from a service node and comprising the trace of said route request from said mobile node to said service node,
a determining module for determining based on said route replies received by said mobile node those routes which are disjoint, wherein said route request contains a path extension parameter indicating the extent by which a found route may be worse than the best known available route with respect to a certain metrics, said mobile node further comprising:
a re-issuing module for if said route replies received by said mobile node do not correspond to a sufficient number of disjoint routes, issuing a new route request having an incremented path extension parameter.

7. The mobile node of claim 6, further comprising:
a storage module for storing, when relaying a route request, a trace route of said route request;
a forwarding module for if a route request reaches said mobile node again, forwarding said route request only if the path which is has traveled with respect to a certain metrics is not worse than the best known route by an amount larger than defined by said path extension parameter

8. The mobile node of claims 6 or 7, further comprising:
a module for attaching a sequence number identifying the route request to each newly issued route request;
a storage module for storing in case of a relayed route request message the originating mobile node, the sequence number and the trace route;
a module for checking if a route request is received by said mobile node whether said route request is to be forwarded or to be discarded by carrying out one or more of the following.
if no entry corresponding to a route request from the node from which the request originates is stored at the storage of said mobile node, forwarding said route request;
for those requests for which a request from the originating node has already been stored, if no entry corresponding to the sequence number of said received route request is stored at the storage of said mobile node, forwarding said route request,
if an entry corresponding to a higher sequence number than the one of said received route request is stored at the storage of said mobile node, discarding said route request;
if an entry corresponding to the sequence number of said received route request is stored at the storage of said mobile node, forwarding said route request only if the path which the route request has traveled is different from previous route requests stored at said mobile node and if the path from the source mobile node from which the route request originates to the relaying mobile node which it has traveled with respect to a certain metrics is not worse than the best known route by an amount larger than defined by said path extension parameter

9. The mobile node of one of the claims 6 to 8, further comprising:
a sending module for sending a new route request having an incremented path extension parameter if one or more of the following conditions are met:
the route replies do not contain disjoint routes to all or to a predetermined number of service nodes,
the route replies contain link disjoint routes but not node disjoint routes.

10. The mobile node of one of the claims 6 to 9, further comprising:
a module for if multiple possible disjoint routes have been discovered by said method, selecting those routes for the communication which according to the metrics of the path extension parameter are most advantegeous.

11. A computer program comprising computer executable instructions which when being executed by a computer enable said computer to carry out a method according to one of claims 1 to 5.

## Patentansprüche

1. Ein Verfahren zum Entdecken von Routen von einem mobilen Knoten zu multiplen Serviceknoten, die einen Service an den mobilen Knoten in einem Ad-hoc-Netzwerk liefern können, aufweisend eine Mehrzahl von Knoten, wobei das Verfahren aufweist:
Senden einer Routenanforderung von dem mobilen Knoten, wobei die Routenanforderung spezifiziert, dass eine Route zu irgendeinem Serviceknoten entdeckt werden soll, ohne einen einzelnen individuellen Serviceknoten als eine Destination zu spezifizieren;
Verteilen der Routenanforderung durch die Knoten des Netzwerks, wobei jeder Knoten, der die Routenanforderung weiterverbreitet, eine eigene ID an die Routenanforderung anhängt;
wenn die Routenanforderung einen Serviceknoten erreicht, Zurücksenden einer Routenantwort aufweisend die Spur der Routenanforderung von dem mobilen Knoten zu dem Serviceknoten;
Ermitteln, basierend auf den Routenantworten, die von dem mobilen Knoten empfangen werden, derjenigen Routen, die unzusammenhängend sind, wobei die Routenanforderung einen Pfaderweiterungsparameter enthält, der angibt, bis zu welchem Grad eine gefundene Route schlechter sein darf als der beste Pfad bezüglich einer bestimmten Metrik, wobei das Verfahren ferner aufweist:
Falls die Routenantworten, die von dem mobilen Knoten empfangen werden, nicht einer ausreichenden Anzahl von unzusammenhängenden Routen entsprechen, Ausgeben einer neuen Routenanforderung mit einem imkrementierten Pfaderweiterungsparameter.

2. Das Verfahren nach Anspruch 1, ferner aufweisend:
In jedem Knoten, der eine Routenanforderung weiterleitet, Speichern einer Routenspur der Routenanforderung;
falls eine Routenanforderung einen Knoten erneut erreicht, Weiterleiten der Routenanforderung nur dann, wenn der Pfad, den sie gereist ist, bezüglich einer bestimmten Metrik nicht um einen größeren Betrag als definiert durch den Pfaderweiterungsparameter schlechter ist als die beste bekannte Route.

3. Das Verfahren nach einem der vorhergehenden Ansprüche, ferner aufweisend:
Anfügen einer Sequenznummer, die die Routenanforderung identifiziert, an jede neue ausgegebene Routenanforderung;
in jedem Knoten, der eine Routenanforderung weiterleitet, Speichern des ursprünglichen mobilen Knotens, der Sequenznummer und der Routenspur der Routenanforderung;
wenn eine Routenanforderung durch einen Relayknoten empfangen wird, Überprüfen, ob die Routenanforderung weitergeleitet oder verworfen werden soll, und zwar durch Ausführen von einem oder mehreren der folgenden:
Falls kein Eintrag im Speicher des mobilen Knotens gespeichert ist, der einer Routenanforderung von dem Knoten, von dem die Anforderung ausgeht, entspricht, Weiterleiten der Routenanforderung;
für diejenigen Anforderungen, für die eine Anforderung von dem ausgehenden Knoten bereits gespeichert wurde, falls kein Eintrag entsprechend der Sequenznummer der empfangenen Routenanforderung in dem Speicher des Relayknotens gespeichert ist, Weiterleiten der Routenanforderung;
falls ein Eintrag entsprechend einer höheren Sequenznummer als der der empfangenen Routenanforderung im Speicher des Relayknotens gespeichert ist, Verwerfen der Routenanforderung;
falls ein Eintrag, der der Sequenznummer der empfangenen Routenanforderung im Speicher des Relayknotens gespeichert ist, Weiterleiten der Routenanforderung nur dann, wenn der Pfad, den die Routenanforderung gereist ist, sich von vorherigen Routenanforderungen, die in dem Relayknoten gespeichert sind, unterscheidet und der Pfad, den sie gereist ist, bezüglich einer bestimmten Metrik nicht schlechter ist als die beste bekannte Route, und zwar um einen Betrag, der größer ist als definiert durch den Pfaderweiterungsparameter.

4. Das Verfahren nach einem der vorhergehenden Ansprüche, ferner aufweisend:
Senden einer neuen Routenanforderung mit einem inkrementierten Pfaderweiterungsparameter, wenn eine oder mehrere der folgenden Bedingungen erfüllt sind:
Die Routenanforderung enthält keine unzusammenhängenden Routen zu allen oder einer vorbestimmten Anzahl von Serviceknoten;
die Routenanforderung enthält Link-unzusammenhängende-Routen, aber nicht Knoten-unzusammenhängende-Routen.

5. Das Verfahren nach einem der vorhergehenden Ansprüche, ferner aufweisend:
Falls mehrere mögliche unzusammenhängende Routen durch das Verfahren entdeckt wurden, Auswählen derjenigen Routen für die Kommunikation, die gemäß der Metrik des Pfaderweiterungsparameters am vorteilhaftesten sind.

6. Ein mobiler Knoten zum Entdecken von Routen von dem mobilen Knoten zu multiplen Serviceknoten, die einen Service an den mobilen Knoten in einem Ad-hoc-Netzwerk liefern können, das eine Mehrzahl von Knoten aufweist, wobei der mobile Knoten aufweist:
Ein Sendemodul zum Senden einer Routenanforderung von dem mobilen Knoten, wobei die Routenanforderung spezifiziert, dass eine Route zu einem Serviceknoten entdeckt werden soll, und zwar ohne einen einzelnen individuellen Serviceknoten als Destination zu spezifizieren,
eine Einrichtung zum Empfangen einer oder mehrerer Routenantworten, die von einem Serviceknoten zurückgesandt werden und die Spur der Routenanforderung von dem mobilen Knoten zu dem Serviceknoten aufweisen;
ein Ermittlungsmodul zum Ermitteln, basierend auf den Routenanforderungen, die von dem mobilen Knoten empfangen wurden, derjenigen Routen, die unzusammenhängend sind, wobei die Routenanforderung einen Pfaderweiterungsparameter enthält, der das Ausmaß angibt, um das eine Route schlechter sein kann als die beste bekannte verfügbare Route bezüglich einer bestimmten Metrik, wobei der mobile Knoten ferner aufweist:
Ein Modul zum erneuten Ausgeben, um, falls die Routenantworten, die von dem mobilen Knoten empfangen werden, nicht einer ausreichenden Anzahl von unzusammenhängenden Routen entsprechen, erneuten Ausgeben einer Routenanforderung mit einem inkrementierten Pfaderweiterungsparameter.

7. Der mobile Knoten von Anspruch 6, ferner aufweisend:
Ein Speichermodul zum Speichern, wenn eine Routenanforderung weitergeleitet wird, einer Routenspur der Routenanforderung;
ein Weiterleitungsmodul, um, wenn eine Routenanforderung den mobilen Knoten erneut erreicht, die Routenanforderung nur dann weiterzuleiten, wenn der Pfad, den sie gereist ist, bezüglich einer bestimmten Metrik nicht schlechter ist als die beste bekannte Route, und zwar um einen Betrag größer als definiert durch den Pfaderweiterungsparameter.

8. Der mobile Knoten von Anspruch 6 oder 7, ferner aufweisend:
Ein Modul zum Anhängen einer Sequenznummer, die die Routenanforderung identifiziert, an jede neu ausgegebene Routenanforderung;
ein Speichermodul zum Speichern im Fall einer weitergeleiteten Routenanforderungsnachricht des ausgehenden mobilen Knotens, der Sequenznummer und der Routenspur;
ein Modul zum Überprüfen, falls eine Routenanforderung durch den mobilen Knoten empfangen wird, ob die Routenanforderung weitergeleitet oder verworfen werden soll, und zwar durch Ausführen von einem oder mehreren der folgenden:
Falls kein Eintrag im Speicher des mobilen Knotens gespeichert ist, der einer Routenanforderung von dem Knoten, von dem die Anforderung ausgeht, entspricht, Weiterleiten der Routenanforderung;
für diejenigen Anforderungen, für die eine Anforderung von dem ausgehenden Knoten bereits gespeichert wurde, falls kein Eintrag entsprechend der Sequenznummer der empfangenen Routenanforderung in dem Speicher des Relayknotens gespeichert ist, Weiterleiten der Routenanforderung;
falls ein Eintrag entsprechend einer höheren Sequenznummer als der der empfangenen Routenanforderung im Speicher des Relayknotens gespeichert ist, Verwerfen der Routenanforderung;
falls ein Eintrag, der der Sequenznummer der empfangenen Routenanforderung im Speicher des Relayknotens gespeichert ist, Weiterleiten der Routenanforderung nur dann, wenn der Pfad, den die Routenanforderung gereist ist, sich von vorherigen Routenanforderungen, die in dem Relayknoten gespeichert sind, unterscheidet und der Pfad, den sie gereist ist, bezüglich einer bestimmten Metrik nicht schlechter ist als die beste bekannte Route, und zwar um einen Betrag, der größer ist als definiert durch den Pfaderweiterungsparameter.

9. Der mobile Knoten von einem der Ansprüche 6 bis 8, ferner aufweisend:
Ein Sendemodul zum Senden einer neuen Routenanforderung mit einem inkrementierten Pfaderweiterungsparameter, wenn eine oder mehrere der folgenden Bedingungen erfüllt sind:
Die Routenanforderung enthält keine unzusammenhängenden Routen zu allen oder einer vorbestimmten Anzahl von Serviceknoten;
die Routenanforderung enthält Link-unzusammenhängende-Routen, aber nicht Knoten-unzusammenhängende-Routen.

10. Der mobile Knoten von einem der Ansprüche 6 bis 9, ferner aufweisend:
Ein Modul zum, falls mehrere mögliche unzusammenhängende Routen durch das Verfahren entdeckt wurden, Auswählen derjenigen Routen für die Kommunikation, die gemäß der Metrik des Pfaderweiterungsparameters am vorteilhaftesten sind.

11. Ein Computerprogramm aufweisend von einem Computer ausführbare Befehle, die, wenn sie von einem Computer ausgeführt werden, den Computer in die Lage versetzen, ein Verfahren gemäß einem der Ansprüche 1 bis 5 auszuführen.

## Revendications

1. Procédé pour découvrir des trajets depuis un noeud mobile vers de multiples noeuds de service qui peuvent fournir un service audit noeud mobile dans un réseau ad hoc comprenant une pluralité de noeuds, dans lequel ledit procédé comporte :
d'envoyer une demande de trajet depuis ledit noeud mobile, ladite demande de trajet spécifiant qu'un trajet vers un noeud de service quelconque doit être découvert sans spécifier un noeud de service individuel unique en tant que destination,
de distribuer ladite demande de trajet par l'intermédiaires desdits noeuds dudit réseau, alors que chaque noeud distribuant en outre ladite demande de trajet associe son propre ID à ladite demande de trajet,
si une demande de trajet atteint un noeud de service, de renvoyer une réponse de trajet comprenant la trace de ladite demande de trajet depuis ledit noeud mobile audit noeud de service,
de déterminer sur la base desdites réponses de trajet reçues par ledit noeud mobile ces trajets qui sont disjoints, dans lequel ladite demande de trajet contient un paramètre d'extension de chemin indiquant dans quelle mesure un trajet trouvé peut être pire que le meilleur chemin par rapport à une mesure particulière, ledit procédé comprenant en outre :
si lesdites réponses de trajet reçues par ledit noeud mobile ne correspondent pas à un nombre suffisant de trajets disjoints, d'émettre une nouvelle demande de trajet ayant un paramètre d'extension de chemin incrémenté.

2. Procédé selon la revendication 1, comprenant :
dans chaque noeud relayant une demande de trajet, de mémoriser un trajet de trace de ladite demande de trajet,
si une demande de trajet atteint à nouveau un noeud, d'acheminer ladite demande de trajet uniquement si le chemin qui est parcouru par rapport à une mesure particulière n'est pas pire que le meilleur trajet connu d'une quantité supérieure à celle définie par ledit paramètre extension de chemin.

3. Procédé selon l'une des revendications précédentes, comprenant en outre :
d'associer un numéro de séquence identifiant la demande de trajet à chaque demande de trajet nouvellement émise,
dans chaque noeud relayant une demande de trajet, de mémoriser le noeud mobile d'origine, le numéro de séquence et le trajet de trace de ladite demande de trajet,
si une demande de trajet est reçue par un noeud relais, de contrôler si ladite demande de trajet doit être acheminée ou doit être rejetée en exécutant une ou plusieurs des étapes suivantes :
si aucune entrée correspondant à une demande de trajet en provenance du noeud dont la demande émane n'est mémorisée dans la mémoire dudit noeud mobile, acheminer ladite demande de trajet,
pour les demandes pour lesquelles une demande en provenance du noeud d'origine a déjà été mémorisée, si aucune entrée correspondant au numéro de séquence de ladite demande de trajet reçue n'est mémorisée dans la mémoire dudit noeud relais, acheminer ladite demande de trajet,
si une entrée correspondant à un numéro de séquence supérieur à celui de ladite demande de trajet reçue est mémorisée dans la mémoire dudit noeud relais, rejeter ladite demande de trajet,
si une entrée correspondant au numéro de séquence de ladite demande de trajet reçue est mémorisée dans la mémoire dudit noeud relais, acheminer ladite demande de trajet uniquement si le chemin que la demande de trajet a parcouru est différent des demandes de trajet précédentes mémorisées dans ledit noeud relais et si le chemin qu'elle a parcouru par rapport à une mesure particulière n'est pas pire que le meilleur trajet connu d'une quantité supérieure à celle définie par ledit paramètre d'extension de chemin.

4. Procédé selon l'une des revendications précédentes, comprenant en outre :
d'envoyer une nouvelle demande de trajet ayant un paramètre d'extension de chemin incrémenté si une ou plusieurs des conditions suivantes sont satisfaites :
les réponses de trajet ne contiennent pas de trajets disjoints pour la totalité ou un nombre prédéterminé de noeuds de service,
les réponses de trajet contiennent des trajets disjoints de liaison mais pas de trajets disjoints de noeuds.

5. Procédé selon l'une des revendications précédentes, comprenant en outre :
si de multiples trajets disjoints possibles ont été découverts par ledit procédé, de sélectionner ces trajets pour la communication qui, conformément à la mesure du paramètre d'extension de chemin, sont les plus avantageux.

6. Noeud mobile pour découvrir des trajets depuis ledit noeud mobile vers de multiples noeuds de service qui peuvent fournir un service audit noeud mobile dans un réseau ad hoc comprenant une pluralité de noeuds, dans lequel ledit noeud mobile comprend :
un module d'envoi pour envoyer une demande de trajet depuis ledit noeud mobile, ladite demande de trajet spécifiant qu'un trajet vers un noeud de service quelconque doit être découvert sans spécifier un noeud de service individuel unique en tant que destination,
des moyens pour recevoir une ou plusieurs réponses de trajet étant renvoyées par un noeud de service et comprenant la trace de ladite demande de trajet depuis ledit noeud mobile vers ledit noeud de service,
un module de détermination pour déterminer sur la base desdites demandes de trajet reçues par ledit noeud mobile ces trajets qui sont disjoints, dans lequel ladite demande de trajet contient un paramètre d'extension de chemin indiquant dans quelle mesure un trajet trouvé peut être pire que le meilleur trajet disponible connu par rapport à une mesure particulière, ledit noeud mobile comprenant en outre :
un module de réémission pour, si lesdites réponses de trajet reçues par ledit noeud mobile ne correspondent pas à un nombre suffisant de trajets disjoints, émettre une nouvelle demande de trajet ayant un paramètre d'extension de chemin incrémenté.

7. Noeud mobile selon la revendication 6, comprenant en outre :
un module de mémorisation pour mémoriser, lorsqu'une demande de trajet est relayée, un trajet de trace de ladite demande de trajet,
un module d'acheminement pour, si une demande de trajet atteint à nouveau ledit noeud mobile, acheminer ladite demande de trajet uniquement si le chemin qu'elle a parcouru par rapport à une mesure particulière n'est pas pire que le meilleur trajet connu d'une quantité supérieure à celle définie par ledit paramètre extension de chemin.

8. Noeud mobile selon la revendication 6 ou 7, comprenant en outre :
un module pour associer un numéro de séquence identifiant la demande de trajet à chaque demande de trajet nouvellement émise,
un module de mémorisation pour mémoriser, dans le cas d'un message de demande de trajet relayé, le noeud mobile d'origine, le numéro de séquence et le trajet de trace,
un module pour contrôler si une demande de trajet est reçue par ledit noeud mobile selon que ladite demande de trajet doit être acheminée ou doit être rejetée en exécutant une ou plusieurs des étapes suivantes :
si aucune entrée correspondant à une demande de trajet en provenance du noeud dont la demande émane n'est mémorisée dans la mémoire dudit noeud mobile, acheminer ladite demande de trajet,
pour les demandes pour lesquelles une demande en provenance du noeud d'origine a déjà été mémorisée, si aucune entrée correspondant au numéro de séquence de ladite demande de trajet reçue n'est mémorisée dans la mémoire dudit noeud relais, acheminer ladite demande de trajet,
si une entrée correspondant à un numéro de séquence supérieur à celui de ladite demande de trajet reçue est mémorisée dans la mémoire dudit noeud mobile, rejeter ladite demande de trajet,
si une entrée correspondant au numéro de séquence de ladite demande de trajet reçue est mémorisée dans la mémoire dudit noeud mobile, acheminer ladite demande de trajet uniquement si le chemin que la demande de trajet a parcouru est différent des demandes de trajet précédentes mémorisées dans ledit noeud mobile et si le chemin depuis le noeud mobile source duquel la demande de trajet provient jusqu'au noeud mobile de relais qu'elle a parcouru par rapport à une mesure particulière n'est pas pire que le meilleur trajet connu d'une quantité supérieure à celle définie par ledit paramètre d'extension de chemin.

9. Noeud mobile selon l'une des revendications 6 à 8, comprenant en outre :
un module d'envoi pour envoyer une nouvelle demande de trajet ayant un paramètre extension de chemin incrémenté si l'une ou plusieurs des conditions suivantes sont satisfaites :
les réponses de trajet ne contiennent pas de trajets disjoints pour l'ensemble ou un nombre prédéterminé de noeuds de service,
les réponses de trajet contiennent des trajets disjoints de liaison mais pas de trajets disjoints de noeuds.

10. Noeud mobile selon l'une des revendications 6 à 9, comprenant en outre :
un module pour, si de multiples trajets disjoints possibles ont été découverts par ledit procédé, sélectionner ces trajets pour la communication qui, conformément à la mesure du paramètre d'extension de chemin, sont les plus avantageux.

11. Programme informatique comprenant des instructions exécutables lesquelles, lorsqu'elles sont exécutées par un ordinateur, permettent audit ordinateur de mettre en oeuvre un procédé selon l'une des revendications 1 à 5.
